# EUROPÄISCHE PATENTSCHRIFT

(11) **EP 3 784 922 B1**
(45) Veröffentlichungstag und Bekanntmachung des Hinweises auf die Patenterteilung: **11.10.2023**
(21) Anmeldenummer: 19723655.7
(22) Anmeldetag: 26.03.2019
(51) Int. Cl.: F16G 1/10, F16G 5/08, C08L 23/30, B29C 41/28, B29D 29/00

(54) **ARTIKEL MIT TEXTILAUFLAGE, DIE MIT PARTIELL OXIDIERTEM POLYETHYLEN BEHANDELT IST**
ARTICLE COMPRISING A FABRIC LAYER TREATED WITH PARTLY OXIDIZED POLYETHYLENE
ARTICLE REVÊTU D'UNE COUCHE TEXTILE TRAITÉE AVEC DU POLYÉTHYLÈNE PARTIELLEMENT OXYDÉ

(30) Priorität: 26.04.2018 DE 102018206484
(43) Veröffentlichungstag der Anmeldung: 03.03.2021
(73) Patentinhaber: ContiTech Antriebssysteme GmbH, 30165 Hannover (DE)
(72) Erfinder: KANZOW, Henning, 30419 Hannover (DE); KAUTZ, Stephanie, 30419 Hannover (DE); GREINER, Christian, 30419 Hannover (DE); TEVES, Reinhard, 30419 Hannover (DE)
(74) Vertreter: Continental Corporation
(86) Internationale Anmeldenummer: PCT/EP2019/057506
(87) Internationale Veröffentlichungsnummer: WO 2019/206545

(56) Entgegenhaltungen:
- EP-A1- 1 734 280
- US-A- 4 283 455
- US-A1- 2010 190 914

## Beschreibung

Die vorliegende Erfindung betrifft einen Artikel mit einem elastischen Grundkörper auf der Basis wenigstens eines thermoplastischen Elastomers oder auf der Basis eines Vulkanisates mit einer Artikeloberfläche, die mit einer Textilauflage versehen ist, dadurch gekennzeichnet, dass die Textilauflage mit partiell oxidiertem Polyethylen behandelt ist, sowie Verfahren zur Herstellung eines solchen Artikels.

Ein Artikel, der dynamischen Belastungen und somit einem Verschleiß wie auch Geräuschentwicklungen ausgesetzt ist, ist beispielsweise ein Band, Gurt, Riemen, Schlauch, Luftfederbalg, Kompensator oder eine mehrschichtige Stoffbahn, wobei der Riemen in Form eines Antriebsriemens und hier speziell der Keilrippenriemen von besonderer Bedeutung ist. Der Grundkörper des Antriebsriemens umfasst dabei eine Decklage als Riemenrücken und einen Unterbau mit einer Kraftübertragungszone. Diesbezüglich wird insbesondere auf die Patentanmeldungen DE 38 23 157 A1, DE 10 2006 007 509 A1, WO 2005/080821 A1, WO 2006/066669 A1 oder EP 1 734 280 A1 nach dem Oberbegriff des Anspruchs 1. sowie auf die Patente US 3,981,206 und US 5,417,618 verwiesen. Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere (TPE) zu nennen sind. Der elastische Grundkörper ist ferner zumeist noch mit einem eingebetteten Festigkeitsträger bzw. Zugträger versehen, der ein- oder mehrlagig ausgeführt sein kann.

Antriebsriemen als schwerpunktmäßiger Einsatzbereich werden zur Geräuschreduzierung wie auch zur Erhöhung der Abriebbeständigkeit insbesondere im Bereich der Kraftübertragungszone mit einer Beschichtung versehen.

Verschiedene Beschichtungsarten sind für Antriebsriemen bereits bekannt. In der europäischen Patentanmeldung EP 1 431 358 A1 wird beispielsweise eine Lackbeschichtung auf Acrylat- und Polyurethanbasis offenbart. Diese Beschichtung ist auf manchen Motoren nicht dauerhaft, was mit einem Verlust der Funktion durch Verschleiß verbunden ist. Darüber hinaus behindert auch die Zeit für die Lacktrocknung einen effizienten Herstellungsprozess.

In der internationalen Patentanmeldung WO 02/084144 A1 ist ein Zahnriemen mit einer thermoplastischen Oberflächenschicht aus Polyethylen (UHMWPE) beschrieben, um eine verbesserte Abriebbeständigkeit zu erhalten. Eine derartige Beschichtung ist allerdings bei tiefen Temperaturen sehr spröde, so dass sie insbesondere für Keilrippenriemen nicht geeignet ist. Aus der Europäischen Patentanmeldung EP 2 664 645 A1 sind Antriebsriemen, insbesondere Keilrippenriemen, mit einer Beschichtung in Form eines Films oder Folie aus Polyethylen (LDPE, HDPE und LLDPE) bekannt, die sich durch ein gutes Abriebverhalten und teilweise gutes Geräuschverhalten auszeichnen. Diese Beschichtungen führen allerdings bei Keilrippenriemen zu meist nicht gewünschten, sehr hohen Reibungskoeffizienten (CoF-Werten). Darüber hinaus ist bei HDPE die Biegeflexibilität bei tiefen Temperaturen meist nicht ausreichend.

Zur Beschichtung werden weiterhin Textilauflagen verwendet. Vor allem Textilauflagen in Form eines Vlieses, in Form eines Gewebes oder in Form von Maschenware (d.h. in Form eines Gestrickes oder Gewirkes) sind im Stand der Technik bekannt (vgl. beispielsweise WO 2011/1103272 A1, DE 10 2007 062 285 A1, DE 10 2006 007 509 A1 und US 4,027,545).

Vliesbeschichtungen, welche zum Teil zusätzlich eingelagertem Gleitmittel aufweisen, sind unter anderem aus US 6,793,599 B2, US 6,824,485 B2, US 6,609,990 B2 und US 4,892,510 B1 bekannt. Klassische Vliese aus unter Vulkanisationsbedingungen nicht schmelzenden Materialien zeigen eine schlechte Abriebbeständigkeit, welche beispielsweise für die Anwendung bei reibschlüssigen Antriebsriemen, beispielsweise beim Keilrippenriemen für die KFZ-Anwendung, nicht ausreicht. Klassische Vliese sind ferner nicht ausreichend elastisch, um insbesondere das Ausformen von Keilrippenriemen im Formverfahren zu ermöglichen. Der dadurch hervorgerufene Vulkanisatdurchtritt kann das Geräuschverhalten verschlechtern.

In EP 2 166 251 A1, DE 10 2006 007 509 A1, US6443866 B1 oder DE 10 2008 055 497 A1 werden Textilauflagen zum Teil mit Kunststoff, u.a. mit Polyethylenschichten, als Haftschicht bzw. Haftvermittler zwischen dem elastischen Grundkörper und der Textilbeschichtung beschrieben. Diese Haftschichten zeigen aber keine Wirkung bezüglich der Biegewechsellebensdauer der Riemen.

Ein besonders vorteilhaftes Geräuschverhalten sowohl trocken als auch bei Nässe zeigen Keilrippenriemen, deren Textilbeschichtung Cellulosefasern wie Baumwolle enthalten (vgl. beispielsweise DE 10 2007 042 917.9). Allerdings sind auch bei solchen Riemen die Biegewechsellebensdauer sowie die Verschleißbeständigkeit manchmal nicht ausreichend.

Der vorliegenden Erfindung liegt somit die Aufgabe zugrunde, einen Artikel mit einer Beschichtung bereitzustellen, welcher sich durch eine verbesserte Biegewechsellebensdauer, zusammen mit einer geringeren Wärmealterung, sowie einer verbesserten Verschleißbeständigkeit bei gleichzeitig günstigem Reibungskoeffizienten und Geräuschverhalten bei Nässe und Trockenheit auszeichnet.

Diese Aufgabe wird durch die in den Ansprüchen gekennzeichneten Ausführungsformen gelöst.

Insbesondere wird erfindungsgemäß ein Artikel mit einem elastischen Grundkörper auf der Basis wenigstens eines thermoplastischen Elastomers oder auf der Basis eines Vulkanisates mit einer Artikeloberfläche bereitgestellt, die mit einer Textilauflage versehen ist, dadurch gekennzeichnet, dass die Textilauflage mit partiell oxidiertem Polyethylen behandelt ist.

Der erfindungsgemäße Artikel kann jedweder geeignete Artikel sein. Vorzugsweise liegt der erfindungsgemäße Artikel in der Form eines Bandes (beispielsweise eines Transportbandes), Gurtes, Riemens, Schlauches, Luftfederbalges (insbesondere Axialbalges oder Kreuzlagenbalges), Kompensators oder einer mehrschichtigen Stoffbahn vor. Besonders bevorzugt liegt der Artikel in der Form eines Antriebsriemens vor. Dabei umfasst der elastische Grundkörper eine Decklage als Riemenrücken und einen Unterbau mit einer Kraftübertragungszone, wobei die Decklage und/oder die Kraftübertragungszone mit der Textilauflage versehen ist/sind. Besonders bevorzugt ist der Antriebsriemen als Flachriemen, Keilriemen (beispielsweise als flankenoffener oder ummantelter Keilriemen), Keilrippenriemen, Zahnriemen, Kupplungsriemen oder Aufzugsriemen ausgebildet.

Der erfindungsgemäße Artikel weist einen elastischen Grundkörper auf der Basis wenigstens eines thermoplastischen Elastomers oder auf der Basis eines Vulkanisates auf. Unter einem Elastomer werden formfeste, aber elastisch verformbare Kunststoffe verstanden, deren Glasübergangspunkt sich unterhalb der Raum- bzw. Einsatztemperatur befindet. Das Vulkanisat liegt vorzugsweise in Form einer vulkanisierten Kautschukmischung, enthaltend wenigstens eine Kautschukkomponente und Mischungsingredienzien, vor. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluor-Kautschuk (FKM), Naturkautschuk (NR), Styrol-Butadien-Kautschuk (SBR) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes.

Gemäß einer besonders bevorzugten Ausführungsform umfasst die Kautschukkomponente Ethylen-Propylen-Mischpolymerisat (EPM), Ethylen-Propylen-Dien-Mischpolymerisat (EPDM) oder einen Blend aus Ethylen-Propylen-Mischpolymerisat (EPM) und Ethylen-Propylen-Dien-Mischpolymerisat (EPDM) (auch als EPM/EPDM-Verschnitt bezeichnet). Bei Verwendung dieser Materialien wird zusätzlich zu den anderen vorteilhaften Eigenschaften eine Haftungssteigerung zwischen elastischem Grundkörper und Textilauflage erreicht.

Die Mischungsingredienzien umfassen vorzugsweise wenigstens einen Vernetzer oder ein Vernetzersystem (Vernetzungsmittel und Beschleuniger). Wegen der besseren Wärmealterungsbeständigkeit werden bevorzugt Peroxide als Vernetzer eingesetzt. Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Der erfindungsgemäße Artikel weist ferner zumindest eine Artikeloberfläche auf, die mit einer Textilauflage versehen ist. In einer Ausführungsform ist nur eine Artikeloberfläche mit einer Textilauflage versehen. In einer anderen Ausführungsform sind mehrere Artikeloberflächen (insbesondere zwei Artikeloberflächen) mit einer Textilauflage versehen, wobei die Textilauflagen gleich oder verschieden sein können.

Die Textilauflage kann jedwede geeignete Textilauflage sein. In einer bevorzugten Ausführungsform der vorliegenden Erfindung ist die Textilauflage aus der Gruppe, bestehend aus Geweben, Gewirken, Gestricken, Vliesen und Kombinationen davon, ausgewählt. Die Textilauflage umfasst vorzugsweise ein Material, ausgewählt aus der Gruppe, bestehend aus Cellulose (insbesondere Baumwolle (CO), Viskose (CV), Sisal, Hanf oder Leinen), Seide, Kaschmir, Rosshaar, Aramid (AR), Polyurethan (PU), Polybenzimidazol (PBI), Melamin (MEL), Polybenzoxazol (PBO), Kohlenstoff, Polyamid (PA) (insbesondere PA6.6, PA12, PA6), Polycarbonat (PC), Polyethylen (PE) (insbesondere UHMWPE), Polypropylen (PP), Polystyrol (PS), Polyacryl (PAN), Acetat (CA), Triacetat (CTA), Polyvinylalkohol (PVA), Polyamidimid (PAI), Polytrimethylenterephthalat (PTT), Polyimid (PI), Polybutylenterephthalat (PBT), Polytetrafluorethylen (PTFE), Polyphenylensulfid (PPS), Polyetheretherketon (PEEK), Polyester (PES) (insbesondere Polyethylenterephthalat (PET)) und Kombinationen davon.

Besonders bevorzugt umfasst die Textilauflage ein Material, ausgewählt aus Baumwolle (CO), Viskose (CV), PA6.6, PA6, PET, Polyurethan oder Kombinationen davon.

Handelt es sich bei der Textilauflage um ein Gewebe, Gewirk oder Gestrick, ist diese vorzugsweise aus einem oder mehreren Garnen aus den vorstehend genannten Materialien hergestellt. Es können aber auch Mischfasergarne (z.B. bestehend aus Baumwoll- und Polyesterfasern) verwendet werden. Handelt es sich bei der Textilauflage um einen Vlies, kann dieser aus Fasern aus einem oder mehreren der vorstehend genannten Materialien bestehen.

Handelt es sich bei der Textilauflage um ein Gewirk oder Gestrick, ist es bevorzugt, dass wenigstens ein weiterer zusätzlicher Faden zur Stabilisierung des Gewirks oder Gestricks im Verarbeitungsprozess vorhanden ist. Als zusätzlicher Faden kann beispielsweise ein Polyurethanfaden (beispielsweise ein Elastangarn) eingesetzt werden. Der Vorteil der Verwendung eines zusätzlichen Polyurethanfadens liegt darin, dass dadurch eine hohe Dehnbarkeit in Querrichtung erreicht werden kann, welche bei dem Einsatz des Textils auf der Laufseite von Keilrippenriemen erforderlich ist, da man sonst die Rippen nicht ausformen kann. Außerdem wird mit einer solchen Anordnung auch eine gewisse Längsdehnung erreicht, da das Textil beim Umlauf des Riemens um Rückenrollen gedehnt wird. Ist der Artikel ein Keilrippenriemen, wird vorzugsweise eine in sowohl in Längs- als auch in Querrichtung elastische Textilauflage, beispielsweise ein Gestrick oder Gewirk mit Elastan, verwendet. Bei Zahnriemen benötigt man hingegen eine hohe Dehnbarkeit des Textils vor allem in der Längsrichtung (Umlaufrichtung), um die Zähne ausformen zu können.

Die vorliegende Erfindung ist insbesondere dadurch gekennzeichnet, dass die Textilauflage mit partiell oxidiertem Polyethylen behandelt ist.

Unter partiell oxidiertem Polyethylen sind erfindungsgemäß überwiegend lineare Polyethylenwachse zu verstehen, bei denen es sich um Produkte mit relativ niedrigen Molekulargewichten (gewichtsgemittelt) im Bereich von 500 bis 50.000 g/mol handelt. Die Herstellung der Polyethylenwachse erfolgt in der Regel durch direkte Niederdruckpolymerisation oder, bevorzugt, Hochdruckpolymerisation der Monomere oder durch gezielte Depolymerisation von Produkten höherer Molmassen. Die erfindungsgemäß eingesetzten modifizierten Polyethylenwachse können durch Polymerisation von Ethylen, vorzugsweise in Abwesenheit eines Katalysators unter frühzeitigem Polymerisationsabbruch, und anschließende Oxidation, z. B. durch Einleiten von Luft, oder durch Copolymerisation von Ethylen mit geeigneten anderen Monomeren wie beispielsweise Acrylsäure hergestellt werden, wobei der Anteil der Acrylsäureeinheiten vorzugsweise 20%, insbesondere 10% nicht übersteigt. Schließlich ist es möglich, die Dispergierbarkeit von Polyolefinen durch oxidative Oberflächenbehandlung zu verbessern. Übersichten zu diesem Thema finden sich beispielsweise in Ullmanns Enzyklopädie der technischen Chemie, 4. Aufl., 24, 36 sowie in Encycl. Polym. Sci. Eng. 17, 792f. Entsprechende Polyethylenwachse sind als wässrige Dispersionen im Handel erhältlich und weisen üblicherweise einen Feststoffgehalt bis 45 Gew.-%, vorzugsweise bis 25 Gew.-% auf.

Im Rahmen der vorliegenden Erfindung ist die Textilauflage vorzugsweise mit einem oxidierten HDPE-Wachs mit einem mittleren Molekulargewicht (gewichtsgemittelt) im Bereich von 500 bis 50.000 g/mol und insbesondere 2.000 bis 10.000 g/mol behandelt. Ganz besonders bevorzugt weist das HDPE-Wachs ein mittleres Molekulargewicht im Bereich von 5.000 bis 8.000 g/mol auf.

Die Textilauflage kann auf jedwede geeignete Weise mit dem partiell oxidierten Polyethylen behandelt sein. Beispielsweise kann die Textilauflage als Ganzes mit dem partiell oxidierten Polyethylen behandelt sein, entweder bevor oder nachdem die Textilauflage auf die Oberfläche des elastischen Grundkörpers des erfindungsgemäßen Artikels aufgebracht worden ist. Alternativ können aber auch die Fasern oder Garne, aus denen dann die Textilauflage hergestellt wird, mit dem partiell oxidierten Polyethylen behandelt werden.

Die Ausrüstung der Textilauflage mit partiell oxidiertem Polyethylen führt überraschenderweise zu einem Artikel mit verbesserter Biegewechsellebensdauer und Verschleißbeständigkeit. Dabei werden gleich gute Reibungseigenschaften und gleich gutes Geräuschverhalten bei Nässe und Trockenheit wie bei Artikeln mit unbehandelten Textilauflagen erzielt.

Gemäß einer besonders bevorzugten Ausführungsform der vorliegenden Erfindung liegt der erfindungsgemäße Artikel in der Form eines Keilrippenriemens vor, wobei der elastische Grundkörper ein Vulkanisat auf Basis von Ethylen-Propylen-Mischpolymerisat (EPM), von Ethylen-Propylen-Dien-Mischpolymerisat (EPDM) oder eines Blends aus Ethylen-Propylen-Mischpolymerisat (EPM) und Ethylen-Propylen-Dien-Mischpolymerisat (EPDM) ist und wobei die Textilauflage ein Gestrick oder Gewirk aus Baumwolle umfasst. Dabei ist es insbesondere bevorzugt, dass die Textilauflage ferner ein Elastangarn umfasst.

Die Textilauflage kann zusätzlich auf der der Artikelseite zugewandten Seite mit einem Haftmittel versehen sein. Auch kann es mit einer Polymerlösung getränkt sein, insbesondere unter dem Aspekt der Veränderung des CoF-Wertes. Vorteilhaft ist hier auch die Verwendung einer Polymerschicht, insbesondere einer Polymerfolie, wobei diese bevorzugt auf Basis von Polyethylen (beispielsweise LDPE) ist.

Das Haftmittel und/oder die Polymerlösung kann zudem noch ein Trockenschmiermittel enthalten, und zwar bei der Polymerlösung insbesondere zur Senkung des Reibbeiwertes. Das Trockenschmiermittel ist vorzugsweise ein Fluorkunststoff, wie beispielsweise Polytetrafluorethylen (PTFE) und / oder Polyvinylfluorid (PVF) und / oder Polyvinylidenfluorid (PVDF), wobei insbesondere Polytetrafluorethylen (PTFE) zu nennen ist.

Das Haftmittel und/oder die Polymerlösung kann/können ferner elektrisch leitfähig ausgeführt sein, insbesondere auf der Basis von Ruß und/oder Graphit und/oder eines Metallzusatzes. Von besonderer Bedeutung ist dabei der Einsatz eines elektrisch leitfähigen Rußes.

Wie vorstehend bereits ausgeführt, liegt der erfindungsgemäße Artikel vorzugsweise in der Form eines Bandes (beispielsweise eines Transportbandes), Gurtes, Riemens, Schlauches, Luftfederbalges (insbesondere Axialbalges oder Kreuzlagenbalges), Kompensators oder einer mehrschichtigen Stoffbahn vor. Besonders bevorzugt liegt der Artikel in der Form eines Antriebsriemens vor. Dabei umfasst der elastische Grundkörper eine Decklage als Riemenrücken und einen Unterbau mit einer Kraftübertragungszone, wobei die Decklage und/oder die Kraftübertragungszone mit der Textilauflage versehen ist/sind. Besonders bevorzugt ist der Antriebsriemen als Flachriemen, Keilriemen (beispielsweise als flankenoffener oder ummantelter Keilriemen), Keilrippenriemen, Zahnriemen, Kupplungsriemen oder Aufzugsriemen ausgebildet.

Die Textilauflage kann dabei auch als Zahnbeschichtung bei einem Zahnriemen aufgebracht sein, wobei dieser vorzugsweise zumindest in der Umfangsrichtung des Riemens elastisch ist. Dazu wird aus der Bahnenware ein Schlauch hergestellt, der auf die Zahnriemenform aufgezogen wird. Anschließend werden erst die Corde aufgespult und dann eine Mischungsplatte auf der Cordlage angebracht. Weiterhin kann auch das Rückengewebe bei Zahnriemen oder ein Schlauch mit innen liegendem Gewirke mit der erfindungsgemäßen Textilauflage ausgestattet sein.

Die vorliegende Erfindung betrifft ferner verschiedene Verfahren zur Herstellung des erfindungsgemäßen Artikels.

Gemäß einer ersten Ausführungsform betrifft die vorliegende Erfindung ein Verfahren zur Herstellung des erfindungsgemäßen Artikels, welches die Schritte (a) des Behandelns einer Flächentextilie mit partiell oxidiertem Polyethylen und (b) des Aufbringens der mit partiell oxidiertem Polyethylen behandelten Flächentextilie auf die Oberfläche eines elastischen Grundkörpers auf der Basis wenigstens eines thermoplastischen Elastomers oder auf der Basis eines Vulkanisates umfasst.

Bei diesem Verfahren wird also zunächst eine Flächentextilie mit dem partiell oxidiertem Polyethylen behandelt und die so behandelte Flächentextilie auf den elastischen Grundkörper aufgebracht, um so den erfindungsgemäßen Artikel mit einer Textilauflage zu bilden. Diese Behandlung kann auf jedwede geeignete Art und Weise erfolgen. In einer bevorzugten Ausführungsform erfolgt das Behandeln der Flächentextilie mit partiell oxidiertem Polyethylen durch Eintauchen der Flächentextilie in eine Suspension oder Emulsion, die partiell oxidiertes Polyethylen enthält. Dazu enthält die Suspension oder Emulsion partiell oxidiertes Polyethylen vorzugsweise in einer Konzentration von 10 bis 200 g/l, vorzugsweise im Bereich von 20 bis 60 g/l. Gemäß einer alternativen Ausführungsform erfolgt das Behandeln der Flächentextilie mit partiell oxidiertem Polyethylen durch Besprühen der Flächentextilie mit einer Suspension oder Emulsion, die partiell oxidiertes Polyethylen enthält.

Nach dem Eintauchen oder Besprühen wird die behandelte Flächentextilie getrocknet und dann gemäß der üblichen, dem Fachmann bekannten Vorgehensweise für den Aufbau des Artikels verwendet. Im Falle eines Keilrippenriemens wird die mit oxidiertem Polyethylen ausgerüstete Flächentextilie (gegebenenfalls vor der Vulkanisation in einer gerippten Hohlform) auf den Riemenrohwickel auf die Unterbaumischungsplatte aufgelegt.

In einer weiteren Ausführungsform betrifft die vorliegende Erfindung ein Verfahren zur Herstellung des erfindungsgemäßen Artikels, welches die Schritte (a) des Behandelns von Fasern oder Garnen mit partiell oxidiertem Polyethylen, (b) des Herstellens einer Flächentextilie aus den mit partiell oxidiertem Polyethylen behandelten Fasern oder Garnen und (c) des Aufbringens der Flächentextilie auf die Oberfläche eines elastischen Grundkörpers auf der Basis wenigstens eines thermoplastischen Elastomers oder auf der Basis eines Vulkanisates umfasst.

Bei diesem Verfahren wird also nicht die fertige Flächentextilie behandelt, sondern die Fasern oder Garne, aus denen dann anschließend die Flächentextilie hergestellt wird. Es werden also beispielsweise die Garne vor dem Web- oder Strickprozess behandelt. Vorzugsweise erfolgt zuvor noch eine thermische Behandlung der Fasern oder Garne derart, dass das oxidierte Polyethylen schmilzt und sich so besser auf die Fasern oder Garne legt. Auch hier kann die Behandlung der Fasern oder Garne mit dem oxidierten Polyethylen erfolgen, indem die Fasern oder Garne in eine Suspension oder Emulsion, die partiell oxidiertes Polyethylen enthält, eingetaucht werden oder mit einer solchen Suspension oder Emulsion besprüht werden.

In einer weiteren Ausführungsform betrifft die vorliegende Erfindung ein Verfahren zur Herstellung des erfindungsgemäßen Artikels, welches die Schritte (a) des Bereitstellens eines Artikel mit einem elastischen Grundkörper auf der Basis wenigstens eines thermoplastischen Elastomers oder auf der Basis eines Vulkanisates mit einer Artikeloberfläche, die mit einer (unbehandelten) Textilauflage versehen ist und (b) des Behandelns der Textilauflage mit partiell oxidiertem Polyethylen durch Eintauchen des Artikels in eine Suspension oder Emulsion, die partiell oxidiertes Polyethylen enthält, oder durch Besprühen des Artikels mit einer Suspension oder Emulsion, die partiell oxidiertes Polyethylen enthält, umfasst.

In diesem Verfahren wird zunächst ein Artikel, bestehend aus elastischem Grundkörper und einer unbehandelten Textilauflage, hergestellt und dieser anschließend mit partiell oxidiertem Polyethylen behandelt.

Die Erfindung wird nunmehr anhand von Beispielen näher erläutert.

### Beispiele:

Es wurden 4 verschiedene Keilrippenriementypen im Formverfahren hergestellt, wobei jeweils die Artikel der Beispiele A und B und die Beispiele C und D gleiche Decklagen, Unterbaumischungen, Polyestercorde und Haftschichten für die Textilbeschichtung aufwiesen. Die Artikel der Beispiele A und B nutzten das gleiche Baumwoll-Elastan-Gestrick, allerdings wurde die Textilauflage bei Beispiel B vor dem Belegen der Rohwickel mit 6,5 g/m² oxidiertem HDPE ausgerüstet. Analog nutzten die Artikel der Beispiele C und D das gleiche etwas schwerere Baumwoll-Elastan-Gestrick, allerdings wurde die Textilauflage für Beispiel D vor dem Belegen der Rohwickel mit ca. 8 g/m² oxidiertem HDPE ausgerüstet. Die Wickel wurden in Keilrippenriemenhohlformen geheizt und als 6PK1378-Riemen (Bezeichnung s. ISO 9982) abgestochen. Die Riemen von den Typen A und B unterschieden sich von den Typen C und D neben den Textilbeschichtungen auch in den Gummimischungen (Vulkanisaten) und in den Profiltiefen, was sich wiederum in den Riemenhöhen bemerkbar machte. Bei den verwendeten Gummimischungen (in der nachfolgenden Tabelle als EPDM1 und EPDM2 bezeichnet) handelte es sich um peroxidisch vernetzte EPDM-Mischungen mit unterschiedlichen Rezepturen, also unterschiedlichen Füllstoffgehalten und Vernetzungsgraden.

Die Riementypen A, B, C, D wurden dann auf einem Hitzebiegewechselprüfstand auf Dauerhaltbarkeit und Wärmealterung getestet, wobei eine tägliche visuelle Kontrolle des Riemens erfolgte. In diesem Test bekommen Keilrippenriemen gewöhnlich nach einer gewissen Laufzeit erst Anbrüche und dann Ausbrüche. Die Prüfung wurde jeweils abgebrochen, wenn bei der Kontrolle 3 oder mehr Anbrüche oder 1 oder mehr Ausbrüche am Unterbau beobachtet wurden. Bei der Prüfung handelte es sich um eine 5-Scheibenprüfung (Durchmesser Antriebsscheibe = 60 mm, weitere Scheiben = 50 mm), die an den VDA-Hitzebiegewechseltest (Stand 27.09.2005) angelehnt ist, der wiederum 9 Scheiben verwendet. Außerdem wurde die Prüfung anders als beim VDA-Test konstant bei 130°C Umgebungstemperatur durchgeführt.

Weiterhin wurde der Reibbeiwert (CoF) nach SAE J2432, Ausgabe 2015, nass und trocken ermittelt.

Als letztes wurden noch Verschleißversuche auf einem Dieselmotor durchgeführt (Laufzeit 72h). Dabei wurde der Massenverlust der Riemen mit Hilfe einer Waage bestimmt.

Als oxidiertes Polyethylen wurde das im Handel erhältliche Produkt "POLYAVIN COP" von der Fa. BEZEMA verwendet, wobei eine wässrige Suspension mit 40 g/l dieses Produktes angesetzt wurde. Die Wirksubstanz im "POLYAVIN COP" ist oxidiertes HDPE mit einem Molekulargewicht (gewichtsgemittelt) von 5.000 bis 8.000.

Die nachfolgende Tabelle fasst die für die Beispiele A bis D gefundenen Ergebnisse zusammen:

| Beispiel | A (Vergleich) | B | C (Vergleich) | D |
|---|---|---|---|---|
| Riemenhöhe | 4,1 mm | 4,1 mm | 4,7 mm | 4,7 mm |
| Riemenlänge | 6PK1378 | 6PK1378 | 6PK1329 | 6PK1329 |
| Unterbau | EPDM 1 | EPDM 1 | EPDM 2 | EPDM 2 |
| Flächengewicht reines Textilauflage | 180 g/m² | 180 g/m² | 225 g/m² | 225 g/m² |
| Materialzusammensetzung Textilauflage | Baumwolle 93%, Elastan 7% | Baumwolle 93%, Elastan 7% | Baumwolle 91%, Elastan 9% | Baumwolle 91%, Elastan 9% |
| Gewichtszunahme nach dem Tauchen in wäßriger Suspension mit 40g/l oxidiertem HDPE und anschließendem Trocknen | - | 6,5 g/m² | - | 8 g/m² |
| Haftschicht zwischen Textil und Unterbaumischung | LDPE-Folie, 30 µm | LDPE-Folie, 30 µm | LDPE-Folie, 30 µm | LDPE-Folie, 30 µm |
| CoF trocken | 1,5 | 1,5 | 1,2 | 1,2 |
| CoF nass | 1,0 | 1,0 | 1,1 | 1,1 |
| Mittlere Laufzeit Biegewechseltest bei 130°C | 180 h | 320 h | 205 h | 275 h |
| Massenverlust im Verschleißtest auf Dieselmotor nach 72h Leerlauf | 1,10% | 0,50% | 2,50% | 0,80% |

Es wurden vergleichbare Reibergebnisse nass und trocken (CoF) der Riemenvarianten A und B bzw. C und D gefunden. Aber die Riemen B und D, deren Textilbeschichtung vor der Vulkanisation mit oxidiertem HDPE ausgerüstet wurden, zeigten deutlich höhere Biegewechsellebensdauern als die Vergleichsriemen A und C, deren Textilbeschichtungen kein oxidiertes HDPE enthielt.

Außerdem wurden signifikant geringere Massenverluste im Verschleißtest registriert.

## Patentansprüche

1. Artikel mit einem elastischen Grundkörper auf der Basis wenigstens eines thermoplastischen Elastomers oder auf der Basis eines Vulkanisates mit einer Artikeloberfläche, die mit einer Textilauflage versehen ist, **dadurch gekennzeichnet, dass** die Textilauflage mit partiell oxidiertem Polyethylen behandelt ist.

2. Artikel nach Anspruch 1, wobei die Textilauflage aus der Gruppe, bestehend aus Geweben, Gewirken, Gestricken, Vliesen und Kombinationen davon, ausgewählt ist.

3. Artikel nach Anspruch 1 oder 2, wobei die Textilauflage ein Material umfasst, ausgewählt aus der Gruppe, bestehend aus Cellulose, Seide, Kaschmir, Rosshaar, Aramid (AR), Polyurethan (PU), Polybenzimidazol (PBI), Melamin (MEL), Polybenzoxazol (PBO), Kohlenstoff, Polyamid (PA), Polycarbonat (PC), Polyethylen (PE), Polypropylen (PP), Polystyrol (PS), Polyacryl (PAN), Acetat (CA), Triacetat (CTA), Polyvinylalkohol (PVA), Polyamidimid (PAI), Polytrimethylenterephthalat (PTT), Polyimid (PI), Polybutylenterephthalat (PBT), Polytetrafluorethylen (PTFE), Polyphenylensulfid (PPS), Polyetheretherketon (PEEK), Polyester (PES) und Kombinationen davon.

4. Artikel nach Anspruch 3, wobei die Textilauflage ein Material umfasst, ausgewählt aus Baumwolle (CO), Viskose (CV), PA6.6, PA6, PET, Polyurethan oder Kombinationen davon.

5. Artikel nach einem der Ansprüche 1 bis 4, wobei der elastische Grundkörper ein elastischer Grundkörper auf der Basis eines thermoplastischen Polymers oder eines Vulkanisates ist, welches in Form einer vulkanisierten Kautschukmischung vorliegt, enthaltend wenigstens eine Kautschukkomponente und Mischungsingredienzien, wobei die Kautschukkomponente aus der Gruppe, bestehend aus Ethylen-Propylen-Mischpolymerisat (EPM), Ethylen-Propylen-Dien-Mischpolymerisat (EPDM), (teil)hydriertem Nitrilkautschuk (HNBR), Chloropren-Kautschuk (CR), Fluor-Kautschuk (FKM), Naturkautschuk (NR), Styrol-Butadien-Kautschuk (SBR), Butadien-Kautschuk (BR) und Kombinationen davon, ausgewählt ist.

6. Artikel nach Anspruch 5, wobei die Kautschukkomponente Ethylen-Propylen-Mischpolymerisat (EPM), Ethylen-Propylen-Dien-Mischpolymerisat (EPDM) oder einen Blend aus Ethylen-Propylen-Mischpolymerisat (EPM) und Ethylen-Propylen-Dien-Mischpolymerisat (EPDM) umfasst.

7. Artikel nach einem der Ansprüche 1 bis 6 in der Form eines Bandes, Gurtes, Riemens, Schlauches, Luftfederbalges, Kompensators oder einer mehrschichtigen Stoffbahn.

8. Artikel nach Anspruch 7 in der Form eines Antriebsriemens, wobei der elastische Grundkörper eine Decklage als Riemenrücken und einen Unterbau mit einer Kraftübertragungszone umfasst, wobei die Decklage und/oder die Kraftübertragungszone mit der Textilauflage versehen ist/sind.

9. Artikel nach Anspruch 8, wobei der Antriebsriemen als Flachriemen, Keilriemen, Keilrippenriemen, Zahnriemen, Kupplungsriemen oder Aufzugsriemen ausgebildet ist.

10. Artikel nach einem der Ansprüche 1 bis 9 in der Form eines Keilrippenriemens, wobei der elastische Grundkörper ein Vulkanisat auf Basis von Ethylen-Propylen-Mischpolymerisat (EPM), von Ethylen-Propylen-Dien-Mischpolymerisat (EPDM) oder eines Blends aus Ethylen-Propylen-Mischpolymerisat (EPM) und Ethylen-Propylen-Dien-Mischpolymerisat (EPDM) ist und wobei die Textilauflage ein Gestrick oder Gewirk aus Baumwolle umfasst.

11. Artikel nach Anspruch 10, wobei die Textilauflage ferner ein Elastangarn umfasst.

12. Verfahren zur Herstellung eines Artikels nach einem der Ansprüche 1 bis 11, umfassend die Schritte
(a) des Behandelns einer Flächentextilie mit partiell oxidiertem Polyethylen und
(b) des Aufbringens der mit partiell oxidiertem Polyethylen behandelten Flächentextilie auf die Oberfläche eines elastischen Grundkörpers auf der Basis wenigstens eines thermoplastischen Elastomers oder auf der Basis eines Vulkanisates.

13. Verfahren nach Anspruch 12, wobei das Behandeln der Flächentextilie mit partiell oxidiertem Polyethylen durch Eintauchen der Flächentextilie in eine Suspension oder Emulsion, die partiell oxidiertes Polyethylen enthält, erfolgt.

14. Verfahren zur Herstellung eines Artikels nach einem der Ansprüche 1 bis 11, umfassend die Schritte
(a) des Behandelns von Fasern oder Garnen mit partiell oxidiertem Polyethylen,
(b) des Herstellens einer Flächentextilie aus den mit partiell oxidiertem Polyethylen behandelten Fasern oder Garnen und
(c) des Aufbringens der Flächentextilie auf die Oberfläche eines elastischen Grundkörpers auf der Basis wenigstens eines thermoplastischen Elastomers oder auf der Basis eines Vulkanisates.

15. Verfahren zur Herstellung eines Artikels nach einem der Ansprüche 1 bis 11, umfassend die Schritte
(a) des Bereitstellens eines Artikel mit einem elastischen Grundkörper auf der Basis wenigstens eines thermoplastischen Elastomers oder auf der Basis eines Vulkanisates mit einer Artikeloberfläche, die mit einer Textilauflage versehen ist, und
(b) des Behandelns der Textilauflage mit partiell oxidiertem Polyethylen durch Eintauchen des Artikels in eine Suspension oder Emulsion, die partiell oxidiertes Polyethylen enthält, oder durch Besprühen des Artikels mit einer Suspension oder Emulsion, die partiell oxidiertes Polyethylen enthält.

## Claims

1. Article having an elastic main body based on at least one thermoplastic elastomer or based on a vulcanizate having an article surface provided with a textile cover ply, **characterized in that** the textile cover ply is treated with partially oxidized polyethylene.

2. Article according to Claim 1, wherein the textile cover ply is selected from the group consisting of wovens, formed-loop knits, drawn-loop knits, nonwovens and combinations thereof.

3. Article according to Claim 1 or 2, wherein the textile cover ply comprises a material selected from the group consisting of cellulose, silk, cashmere, horsehair, aramid (AR), polyurethane (PU), polybenzimidazole (PBI), melamine (MEL), polybenzoxazole (PBO), carbon, polyamide (PA), polycarbonate (PC), polyethylene (PE), polypropylene (PP), polystyrene (PS), polyacrylic (PAN), acetate (CA), triacetate (CTA), polyvinyl alcohol (PVA), polyamideimide (PAI), polytrimethylene terephthalate (PTT), polyimide (PI), polybutylene terephthalate (PBT), polytetrafluoroethylene (PTFE), polyphenylene sulfide (PPS), polyetheretherketone (PEEK), polyester (PES) and combinations thereof.

4. A article according to Claim 3, wherein the textile cover ply comprises a material selected from cotton (CO), viscose (CV), PA6.6, PA6, PET, polyurethane or combinations thereof.

5. Article according to any of Claims 1 to 4, wherein the elastic main body is an elastic main body based on a thermoplastic polymer or a vulcanizate in the form of a vulcanized rubber mixture containing at least one rubber component and mixture ingredients, wherein the rubber component is selected from the group consisting of ethylene-propylene copolymer (EPM), ethylene-propylene-diene copolymer (EPDM), (partially) hydrogenated nitrile rubber (HNBR), chloroprene rubber (CR), fluororubber (FKM), natural rubber (NR), styrene-butadiene rubber (SBR), butadiene rubber (BR) and combinations thereof.

6. Article according to Claim 5, wherein the rubber component comprises ethylene-propylene copolymer (EPM), ethylene-propylene-diene copolymer (EPDM) or a blend of ethylene-propylene copolymer (EPM) and ethylene-propylene-diene copolymer (EPDM).

7. Article according to any of Claims 1 to 6 in the form of a band, strap, belt, hose, air spring bellows, expansion joint or a multilayer fabric web.

8. Article according to Claim 7 in the form of a drive belt, wherein the elastic main body comprises a top ply as the belt backing and a substructure having a force transmission zone, wherein the top ply and/or the force transmission zone are provided with the textile cover ply.

9. Article according to Claim 8, wherein the drive belt is designed as a flat belt, V-belt, V-ribbed belt, toothed belt, clutch belt or elevator belt.

10. Article according to any of Claims 1 to 9 in the form of a V-ribbed belt, wherein the elastic main body is a vulcanizate based on ethylene-propylene copolymer (EPM), ethylene-propylene-diene copolymer (EPDM) or a blend of ethylene-propylene copolymer (EPM) and ethylene-propylene-diene copolymer (EPDM) and wherein the textile cover ply comprises a drawn-loop knit or formed-loop knit made of cotton.

11. Article according to Claim 10, wherein the textile cover ply further comprises an elastane yarn.

12. Process for producing an article according to any of Claims 1 to 11, comprising the steps of:
(a) treating a sheetlike textile with partially oxidized polyethylene and
(b) applying the sheetlike textile treated with partially oxidized polyethylene to the surface of an elastic main body based on at least one thermoplastic elastomer or based on a vulcanizate.

13. Process according to Claim 12, wherein the treating of the sheetlike textile with partially oxidized polyethylene is carried out by immersing the sheetlike textile in a suspension or emulsion containing partially oxidized polyethylene.

14. Process for producing an article according to any of Claims 1 to 11, comprising the steps of:
(a) treating fibres or yarns with partially oxidized polyethylene,
(b) producing a sheetlike textile from the fibres or yarns treated with partially oxidized polyethylene and
(c) applying the sheetlike textile to the surface of an elastic main body based on at least one thermoplastic elastomer or based on a vulcanizate.

15. Process for producing an article according to any of Claims 1 to 11, comprising the steps of:
(a) providing an article with an elastic main body based on at least one thermoplastic elastomer or based on a vulcanizate having an article surface provided with a textile cover ply and
(b) treating the textile cover ply with partially oxidized polyethylene by immersing the article in a suspension or emulsion containing partially oxidized polyethylene or by spraying the article with a suspension or emulsion containing partially oxidized polyethylene.

## Revendications

1. Article présentant un corps de base élastique sur la base d'au moins un élastomère thermoplastique ou sur la base d'un produit de vulcanisation présentant une surface d'article qui est pourvue d'un revêtement en textile, **caractérisé en ce que** le revêtement en textile est traité par du polyéthylène partiellement oxydé.

2. Article selon la revendication 1, le revêtement en textile étant choisi dans le groupe constitué par les tissus, les étoffes à mailles, les tricots, les non-tissés et leurs combinaisons.

3. Article selon la revendication 1 ou 2, le revêtement en textile comprenant un matériau choisi dans le groupe constitué par la cellulose, la soie, le cachemire, le crin, l'aramide (AR), le polyuréthane (PU), le polybenzimidazole (PBI), la mélamine (MEL), le polybenzoxazole (PBO), le carbone, le polyamide (PA), le polycarbonate (PC), le polyéthylène (PE), le polypropylène (PP), le polystyrène (PS), le polyacryle (PAN), l'acétate (CA), le triacétate (CTA), le poly(alcool vinylique) (PVA), le polyamide-imide (PAl), le poly(téréphtalate de triméthylène) (PTT), le polyimide (PI), le poly(téréphtalate de butylène) (PBT), le polytétrafluoréthylène (PTFE), le poly(sulfure de phénylène) (PPS), la polyétheréthercétone (PEEK), le polyester (PES) et leurs combinaisons.

4. Articles selon la revendication 3, le revêtement en textile comprenant un matériau choisi parmi le coton (CO), la viscose (CV), le PA6.6, le PA6, le PET, le polyuréthane ou leurs combinaisons.

5. Article selon l'une quelconque des revendications 1 à 4, le corps de base élastique étant un corps de base élastique sur la base d'un polymère thermoplastique ou d'un produit de vulcanisation, qui se trouve sous forme d'un mélange vulcanisé de caoutchouc, contenant au moins un composant de caoutchouc et des ingrédients de mélange, le composant de caoutchouc étant choisi dans le groupe constitué par le copolymère d'éthylène-propylène (EPM), le copolymère d'éthylène-propylène-diène (EPDM), le caoutchouc nitrile (partiellement) hydrogéné (HNBR), le caoutchouc de chloroprène (CR), le caoutchouc fluoré (FKM), le caoutchouc naturel (NR), le caoutchouc de styrène-butadiène (SBR), le caoutchouc de butadiène (BR) et leurs combinaisons.

6. Article selon la revendication 5, le composant de caoutchouc comprenant un copolymère d'éthylène-propylène (EPM), un copolymère d'éthylène-propylène-diène (EPDM) ou un mélange de copolymère d'éthylène-propylène (EPM) et de copolymère d'éthylène-propylène-diène (EPDM).

7. Article selon l'une quelconque des revendications 1 à 6, sous la forme d'une bande, d'une ceinture, d'une courroie, d'un tuyau flexible, d'un soufflet de suspension pneumatique, d'un compensateur ou d'un pan de tissu multicouche.

8. Article selon la revendication 7 sous la forme d'une courroie d'entraînement, le corps de base élastique comprenant une couche de recouvrement en tant que face arrière de courroie et un support présentant une zone de transmission de force, la couche de recouvrement et/ou la zone de transmission de force étant pourvue(s) du revêtement textile.

9. Article selon la revendication 8, la courroie d'entraînement étant conçue sous forme de courroie plane, de courroie trapézoïdale, de courroie striée, de courroie dentée, de courroie d'accouplement ou de courroie élévatrice.

10. Article selon l'une quelconque des revendications 1 à 9 sous la forme d'une courroie striée, le corps de base élastique étant un produit de vulcanisation sur la base de copolymère d'éthylène-propylène (EPM), de copolymère d'éthylène-propylène-diène (EPDM) ou d'un mélange de copolymère d'éthylène-propylène (EPM) et de copolymère d'éthylène-propylène-diène (EPDM) et le revêtement en textile comprenant un tricot ou une étoffe à mailles en coton.

11. Article selon la revendication 10, le revêtement en textile comprenant en outre un fil d'élasthanne.

12. Procédé pour la fabrication d'un article selon l'une quelconque des revendications 1 à 11, comprenant les étapes de
(a) traitement d'un textile plat par du polyéthylène partiellement oxydé et
(b) application du textile plat traité par du polyéthylène partiellement oxydé sur la surface d'un corps de base élastique sur la base d'au moins un élastomère thermoplastique ou sur la base d'un produit de vulcanisation.

13. Procédé selon la revendication 12, le traitement du textile plat par du polyéthylène partiellement oxydé ayant lieu par immersion du textile plat dans une suspension ou une émulsion qui contient du polyéthylène partiellement oxydé.

14. Procédé pour la fabrication d'un article selon l'une quelconque des revendications 1 à 11, comprenant les étapes de
(a) traitement de fibres ou de fils par du polyéthylène partiellement oxydé,
(b) fabrication d'un textile plat à partir des fibres ou des fils traités par du polyéthylène partiellement oxydé et
(c) application du textile plat sur la surface d'un corps de base élastique sur la base d'au moins un élastomère thermoplastique ou sur la base d'un produit de vulcanisation.

15. Procédé pour la fabrication d'un article selon l'une quelconque des revendications 1 à 11, comprenant les étapes de
(a) mise à disposition d'un article présentant un corps de base élastique sur la base d'au moins un élastomère thermoplastique ou sur la base d'un produit de vulcanisation présentant une surface d'article qui est pourvue d'un revêtement en textile et
(b) traitement du revêtement textile par du polyéthylène partiellement oxydé par immersion de l'article dans une suspension ou une émulsion qui contient du polyéthylène partiellement oxydé ou par aspersion de l'article par une suspension ou une émulsion qui contient du polyéthylène partiellement oxydé.
